(19) **Europäisches Patentamt / European Patent Office / Office européen des brevets**

(11) **EP 4 738 109 A1**

(12) **EUROPEAN PATENT APPLICATION**
published in accordance with Art. 153(4) EPC

(43) Date of publication:
**06.05.2026 Bulletin 2026/19**

(21) Application number: **24850455.7**

(22) Date of filing: **31.01.2024**

(51) International Patent Classification (IPC):
**G06F 9/4401** (2018.01)

(52) Cooperative Patent Classification (CPC):
**G06F 9/4401; G06F 13/10; G06F 13/42**

(86) International application number:
**PCT/CN2024/074976**

(87) International publication number:
**WO 2025/030795 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.08.2023 CN 202310996790**

(71) Applicant: **Huawei Technologies Co., Ltd.
Shenzhen, Guangdong 518129 (CN)**

(72) Inventors:
- **GUO, Jian
  Shenzhen, Guangdong 518129 (CN)**
- **QIU, Zhenfa
  Shenzhen, Guangdong 518129 (CN)**
- **ZHENG, Junlong
  Shenzhen, Guangdong 518129 (CN)**
- **HUANG, Ruihua
  Shenzhen, Guangdong 518129 (CN)**

(74) Representative: **Huawei European IPR
Huawei Technologies Duesseldorf GmbH
Riesstraße 25
80992 München (DE)**

(54) **COMMUNICATION METHOD AND APPARATUS**

(57) A communication method is applied to a bus network, and the method includes: A network management unit sends a request message to a bus device. The request message is used to request to access a first configuration space register of the bus device, the request message includes a network address, first indication information, and information about the first configuration space register of the bus device, the network address is an address allocated by the network management unit to the bus device, and the first indication information indicates a type of an operation performed on the first configuration space register. The network management unit receives a response message from the bus device in response to the request message. The configuration space register of the bus device is accessed based on the network address and the information about the configuration space register of the bus device, thereby avoiding stringent delay requirements associated with memory address access.

FIG. 8

**Description**

This application claims priority to Chinese Patent Application No. 202310996790.2, filed with the China National Intellectual Property Administration on August 8, 2023 and entitled "COMMUNICATION METHOD AND APPARATUS", which is incorporated herein by reference in its entirety.

**TECHNICAL FIELD**

Embodiments of this application relate to the field of information technologies, and in particular, to a communication method and apparatus.

**BACKGROUND**

Peripheral component interconnect express (peripheral component interconnect express, PCIe) is a high-speed serial computer expansion bus standard, and is used to connect a processor and external devices. These external devices are referred to as PCIe devices.

Typically, in PCIe protocols, a 32-bit (bits) PCIe identifier (identifier, ID) is used to identify a PCIe device in a system. The 32-bit identifier includes a 16-bit domain (domain) identifier, an 8-bit bus (bus) identifier, a 5-bit device (device) identifier, and a 3-bit function (function) identifier. The 8-bit bus identifier bus ID, the 5-bit device identifier device ID, and the 3-bit function identifier function ID are collectively referred to as BDF for short (BDF represents bus, device, function (bus device function, BDF)). The bus ID provides 256 bus numbers for each PCIe domain. Typically, a computer system supports only one PCIe domain, that is, the entire computer system provides 256 bus numbers.

Specifically, there are generally two ways to access a configuration space register of a PCIe device: memory access and input/output (input/output, I/O) access. I/O access may be simply understood as that users access the configuration space register of the PCIe device according to input/output (IN/OUT) instructions. Specifically, the first 256 bytes of a PCIe device can be accessed through an I/O port. Memory access means to map all configuration spaces of the PCIe device to a memory. After a memory address of the device is determined, the configuration space register of the PCIe device may be accessed in a memory read/write manner.

When the memory access manner is used to access a configuration space register of a bus device (for example, a PCIe device), the processor stalls after an access instruction is sent, the access is subject to delay constraints, and configuration space register access cannot be performed across hosts. Therefore, how to improve performance of accessing the configuration space register of the bus device becomes an urgent problem to be resolved.

**SUMMARY**

Embodiments of this application provide a communication method, to access a configuration space register of a bus device based on a network address and information about the configuration space register of the bus device, and avoid problems caused by a memory address access manner.

According to a first aspect, a communication method is provided, and is applied to a bus network. The method may be performed by a network management unit, or may be performed by a circuit or a chip configured in the network management unit. This is not limited in this application.

The communication method includes: sending a request message to a bus device, where the request message is used to request to access a first configuration space register of the bus device, the request message includes a network address, first indication information, and information about the first configuration space register of the bus device, the network address is an address allocated by the network management unit to the bus device, and the first indication information indicates a type of an operation performed on the first configuration space register; and receiving a response message from the bus device in response to the request message.

Based on the foregoing technical solution, when the network management unit needs to access the configuration space register of the bus device, the network management unit may include the network address and the information about the to-be-accessed configuration space register of the bus device in the request message, to access the configuration space register of the bus device. Access does not need to be performed in a memory read/write manner. Therefore, the way of accessing the configuration space register of the bus device via the request message provided in the technical solution avoids the disadvantages of the memory read/write manner, that is, stringent delay requirements and inability of perform cross-host access.

With reference to the first aspect, in some implementations of the first aspect, the request message further includes a task identifier, the response message includes the task identifier, and the task identifier is used to determine that the response message is a message in response to the request message.

Based on the foregoing technical solution, the request message sent by the network management unit carries the task identifier, so that when the bus device feeds back the response message for the request message, the response message also carries the task identifier, to indicate that the response message is a response to a request message. Therefore, the network management unit can clearly learn, based on the task identifier, of the response message corresponding to the request message.

With reference to the first aspect, in some implementations of the first aspect, the type of the operation performed on the first configuration space register includes a read operation or a write operation.

Based on the foregoing technical solution, the operation performed by the network management unit on the configuration space register of the bus device may be reading or writing. This improves flexibility of the solution, and enriches application scenarios of the solution.

With reference to the first aspect, in some implementations of the first aspect, if the type of the operation performed on the first configuration space register is the write operation, the request message further includes data to be written into the first configuration space register.

Based on the foregoing technical solution, when the network management unit performs the write operation on the configuration space register of the bus device, the network management unit may include the data to be written into the configuration space register of the bus device in the request message, to implement the write operation. The write operation can be implemented based on one request message without additionally transmitting the to-be-written data, to reduce signaling overheads.

With reference to the first aspect, in some implementations of the first aspect, the request message further includes second indication information, and the second indication information indicates to write the data into at least one byte of the first configuration space register.

Based on the foregoing technical solution, when performing the write operation on the configuration space register of the bus device, the network management unit may notify, via the second indication information, the bus device that the to-be-written data may be written into some bytes of the configuration space register of the bus device.

With reference to the first aspect, in some implementations of the first aspect, the information about the first configuration space register includes at least one of the following: type information of the first configuration space register, an index of the first configuration space register, or an address of the first configuration space register.

With reference to the first aspect, in some implementations of the first aspect, the response message indicates whether the operation performed on the first configuration space register succeeds; or if the type of the operation performed on the first configuration space register is the read operation, the response message includes information read from the first configuration space register.

With reference to the first aspect, in some implementations of the first aspect, the response message further includes information indicating that the response message is in response to the read operation or the write operation. The request message is further used to request to access a second configuration space register of the bus device, the request message further includes third indication information and information about the second configuration space register, and the third indication information indicates a type of an operation performed on the second configuration space register.

Based on the foregoing technical solution, the network management unit may access a plurality of configuration space registers of the bus device based on one message, to improve access efficiency.

With reference to the first aspect, in some implementations of the first aspect, the bus network includes the network management unit and a plurality of bus devices, and the bus device is any one of the plurality of bus devices.

According to a second aspect, a communication method is provided, and is applied to a bus device. The method may be performed by the bus device, or may be performed by a circuit configured in the bus device. This is not limited in this application.

The communication method includes: receiving a request message from a network management unit, where the request message is used to request to access a first configuration space register of the bus device, the request message includes a network address, first indication information, and information about the first configuration space register of the bus device, the network address is an address allocated by the network management unit to the bus device, and the first indication information indicates a type of an operation performed on the first configuration space register; and sending a response message to the network management unit in response to the request message.

With reference to the second aspect, in some implementations of the second aspect, the request message further includes a task identifier, the response message includes the task identifier, and the task identifier is used to determine that the response message is a message in response to the request message.

With reference to the second aspect, in some implementations of the second aspect, the type of the operation performed on the first configuration space register includes a read operation or a write operation.

With reference to the second aspect, in some implementations of the second aspect, if the type of the operation performed on the first configuration space register is the write operation, the request message further includes data to be written into the first configuration space register.

With reference to the second aspect, in some implementations of the second aspect, the request message further includes second indication information, and the second indication information indicates to write the data into at least one byte of the first configuration space register.

With reference to the second aspect, in some implementations of the second aspect, the information about the first configuration space register includes at least one of the following: type information of the first configuration space register, an index of the first configuration space register, or an address of the first configuration space register.

With reference to the second aspect, in some implementations of the second aspect, the response message indicates whether the operation performed on the first configuration space register succeeds; or if the type of the operation performed on the first configuration space register is the read operation, the response message includes information read from the first configuration space register.

With reference to the second aspect, in some implementations of the second aspect, the response message further includes information indicating that the response message is in response to the read operation or the write operation.

With reference to the second aspect, in some implementations of the second aspect, the request message is further used to request to access a second configuration space register of the bus device, the request message further includes third indication information and information about the second configuration space register, and the third indication information indicates a type of an operation performed on the second configuration space register.

With reference to the second aspect, in some implementations of the second aspect, the bus network includes the network management unit and a plurality of bus devices, and the bus device is any one of the plurality of bus devices.

For technical effect of the method described in the second aspect and the possible designs of the second aspect, refer to the technical effect in the first aspect and the possible designs of the first aspect.

According to a third aspect, a communication apparatus is provided. The apparatus includes: a storage module, configured to store a program; and a processing module, configured to execute the program stored in the storage module. When the program stored in the storage module is executed, the processing module is configured to perform the methods provided in the foregoing aspects.

According to a fourth aspect, a computer-readable storage medium is provided. The computer-readable medium stores program code executed by a device, and the program code includes instructions used to perform the methods provided in the foregoing aspects.

According to a fifth aspect, a computer program product including instructions is provided. When the computer program product runs on a computer, the computer is enabled to perform the methods provided in the foregoing aspects.

According to a sixth aspect, a chip is provided. The chip includes a processing module and a communication interface. The processing module reads, through the communication interface, instructions stored in a memory, to perform the methods provided in the foregoing aspects.

Optionally, in an implementation, the chip may further include a storage module. The storage module stores instructions. The processing module is configured to execute the instructions stored in the storage module. When the instructions are executed, the processing module is configured to perform the methods provided in the foregoing aspects.

According to a seventh aspect, a chip is provided. The chip includes a network management unit configured to perform the method provided in the first aspect and a bus device configured to perform the method provided in the second aspect.

According to an eighth aspect, a computer system is provided. The computer system includes the chip shown in the seventh aspect.

According to a ninth aspect, a terminal device is provided. The terminal device includes the chip shown in the seventh aspect. For example, the terminal device includes but is not limited to a terminal like a mobile phone or a vehicle.

According to a tenth aspect, a system configured to access a configuration space is provided. The system includes a network management unit configured to perform the method provided in the first aspect and a bus device configured to perform the method provided in the second aspect.

**BRIEF DESCRIPTION OF DRAWINGS**

FIG. 1 is a diagram of a structure of a computer system according to an embodiment of this application;
FIG. 2 is a diagram of a data center according to an embodiment of this application;
FIG. 3 is a diagram of a universal bus protocol packet format according to an embodiment of this application;
FIG. 4 is a diagram of a structure of a host according to an embodiment of this application;
FIG. 5 is a diagram of bus number allocation in a PCIe system;
FIG. 6 is a diagram of a configuration space register of a device according to an embodiment of this application;
(a) in FIG. 7 is a diagram of an address of a configuration space register of a device according to an embodiment of this application;

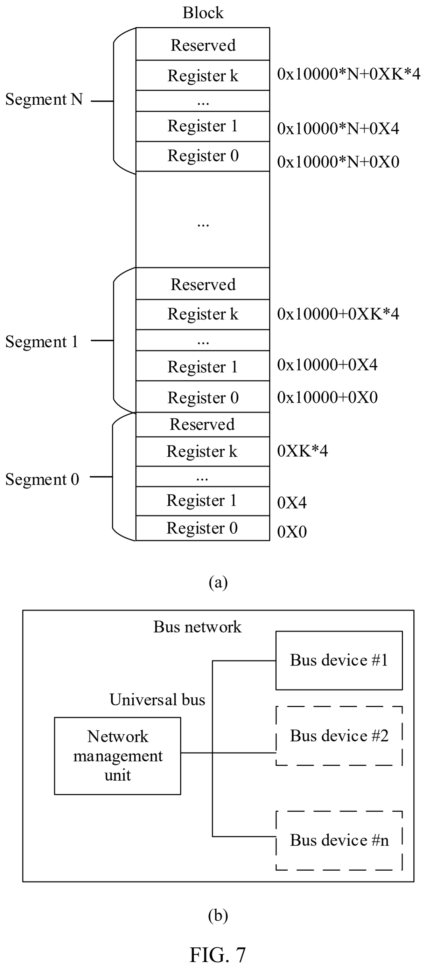

(b) in FIG. 7 is a diagram of a bus network according to an embodiment of this application;

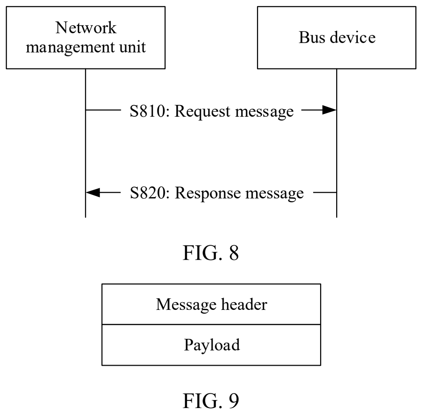

FIG. 8 is a schematic flowchart of a communication method according to this application;

FIG. 9 is a diagram of a transaction layer message according to this application;

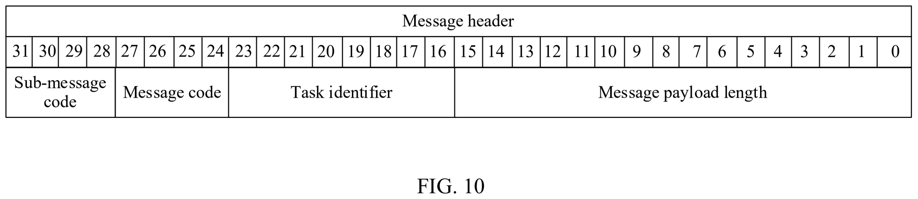

FIG. 10 is a diagram of a message header of a transaction layer message according to this application;

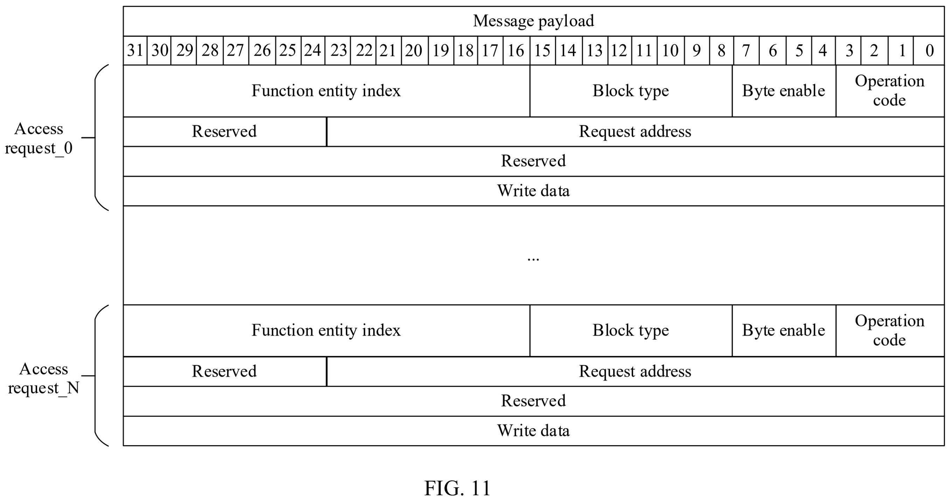

FIG. 11 is a diagram of a payload part of a request message according to this application;

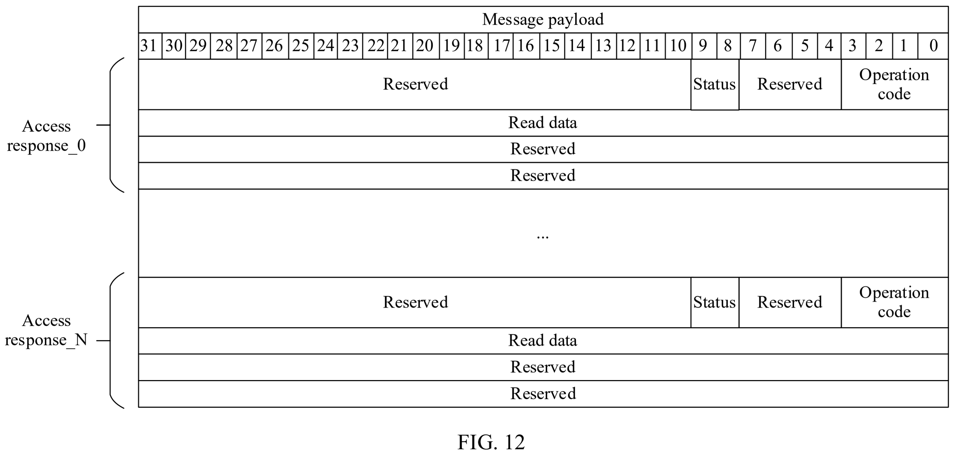

FIG. 12 is a diagram of a payload part of a response message according to this application;

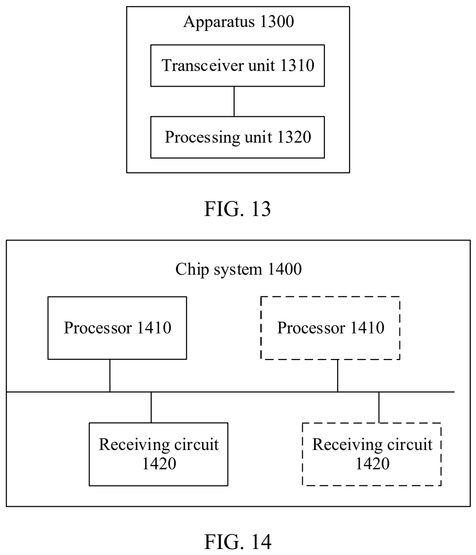

FIG. 13 is a diagram of a structure of a communication apparatus 1300 according to an embodiment of this application;

FIG. 14 is a diagram of a structure of a chip system 1400 according to an embodiment of this application; and

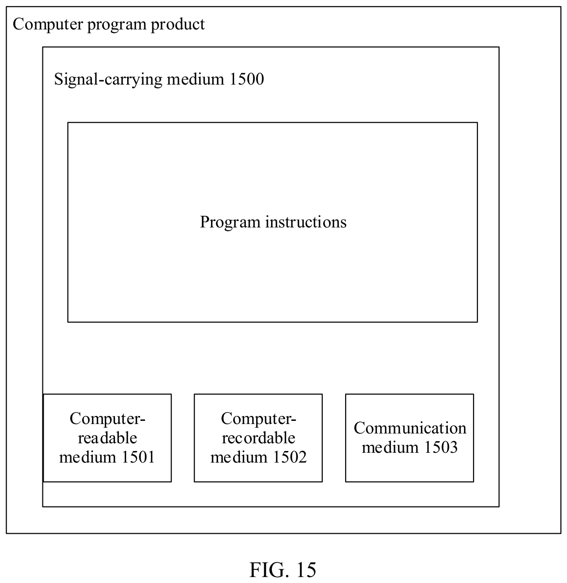

FIG. 15 schematically shows a conceptual partial view of a computer program product according to an embodiment of this application.

## DESCRIPTION OF EMBODIMENTS

The following describes technical solutions in embodiments of this application with reference to accompanying drawings.

This application relates to a processor in a computer system accessing a configuration space of an external device. The computer system may be a server or a terminal. The terminal includes but is not limited to user systems such as a desktop computer, a notebook computer, and a smartphone. For ease of understanding, the following describes a structure of the computer system.

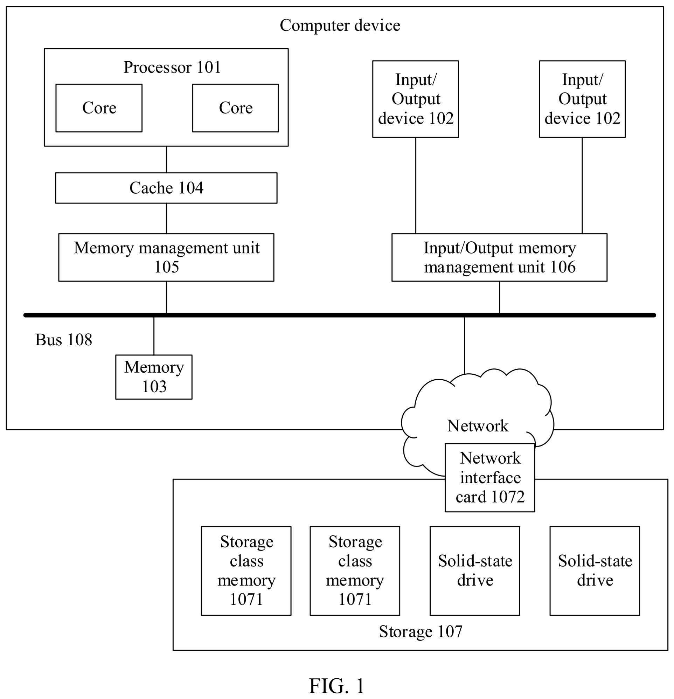

FIG. 1 is a diagram of a structure of a computer system. The computer system includes a processor 101, an input/output device (input/output device, I/O device) 102, a memory 103, a cache 104, a memory management unit (memory management unit, MMU) 105, an input/output memory management unit (input output memory management unit, IOMMU) 106, a storage 107, and a bus 108.

The processor 101 includes at least one core (core), where the core is also referred to as a computing engine. Each core may independently execute a task. When including a plurality of cores, the processor 101 may classify tasks from an application, allowing the application to make full use of the plurality of cores to execute more tasks within specific time. In embodiments, the processor 101 may be a main processor, for example, a central processing unit (Central Processing Unit, CPU).

The input/output device 102 is a hardware device that has a data input capability and/or a data output capability. The input/output device 102 may be divided into an input device and an output device. The input device may include a device like a mouse, a keyboard, a joystick, a stylus, or a microphone, and the output device may include a device like a display or a speaker.

The memory 103, also referred to as an internal memory or a main memory, is configured to temporarily store operation data in the processor 101. Further, the memory 103 is further configured to temporarily store data exchanged with the storage 107. The memory 103 may be generally implemented by using a storage medium like a dynamic random access memory DRAM or a static random access memory (static random access memory, SRAM).

The cache 104 (in embodiments, the cache is a processor cache, for example, a CPU cache) is a component configured to reduce average time required for the processor 101 to access the memory 103. Refer to FIG. 1. In a pyramid-style storage system, the cache 104 is located at a second layer from top to bottom, second only to a register (not shown in FIG. 1) of the processor 101 and above the memory 103 (located at a third layer from top to bottom). Generally, a capacity of the cache 104 is much smaller than that of the memory 103, but an access speed can approach an operating frequency of the processor 101.

The memory management unit 105 is computer hardware configured to process a data access request. The memory management unit 105 is specifically configured to map a virtual address (virtual address, VA) in the data access request. The memory management unit 105 may intercept a data access request sent by the core of the processor 101, and map (or translate) a virtual address in the data access request to a physical address (physical address, PA), to access the memory 103 based on the physical address.

The input/output memory management unit 106 is essentially a memory management unit. Similar to the memory management unit 105 mapping a virtual address visible to the processor 101 to a physical address, the input/output memory management unit 106 is configured to map a virtual address (also referred to as a device address or an I/O address) visible to the input/output device 102 to a physical address.

The storage 107, also referred to as an external storage or a secondary memory, is generally configured to persistently store data. For example, the storage 107 may persistently store the operation data in the processor 101. Even if power supply is abnormal, data that has been written into the storage 107 can still be stored. This avoids data loss. During specific implementation, the storage 107 includes at least one non-volatile memory 1071. The storage may include a plurality of non-volatile memories, where the plurality of non-volatile memories may be of a same type or different types. For example, in the example of FIG. 1, the storage 107 may include two types of non-volatile memories, for example, a storage class memory (storage class memory, SCM) and a solid-state drive (solid-state drive, SSD).

The bus 108 is configured to connect functional components of the computer system. The bus 108 is a public communication backbone for transmitting information between the functional components of the computer system. The bus 108 may be a transmission wire bundle formed by wires. The bus 108 may be further classified into an internal bus and an external bus based on different connection objects.

The internal bus uses internal bus protocols for information transmission. The internal bus protocol includes a bus protocol used to access a memory space of the computer system. The external bus uses external bus protocols for information transmission. The external bus protocols include bus protocols used to access a storage space of the computer system. The memory space is an address space of the memory, and the storage space is an address space of the storage.

In some embodiments, the internal bus protocols include but are not limited to the peripheral component interconnect (peripheral component interconnect, PCI) bus protocol, the peripheral component interconnect express (PCI Express, PCIe) protocol, the QuickPath interconnect (Intel™ QuickPath Interconnect, QPI) protocol, and the universal bus (universal bus) protocol. The external bus protocols include but are not limited to the small computer system interface (small computer system interface, SCSI) protocol or the serial attached small computer system interface (Serial Attached SCSI, SAS) protocol.

It should be noted that the computer system shown in FIG. 1 is described by using an example in which the storage 107 is a remote storage. As shown in FIG. 1, the storage 107 includes a network interface card 1072, which may be, for example, a smart network interface card NIC (that is, a network adapter card). The storage 107 accesses a network via the network interface card 1072, and is further connected to another component of the computer system over the network. The network may be a wired communication network, for example, an optical fiber communication network, or may be a wireless communication network, for example, a wireless local area network (wireless local area network, WLAN) or a fifth generation (the fifth generation, 5G) mobile communication network.

In some possible implementations, the storage 107 of the computer system may alternatively be a local storage, and another component of the computer system, for example, the processor 101, may be connected to the local storage through the bus 108. In some other possible implementations, the computer system may include both a remote storage and a local storage. In addition, embodiments of this application are applicable to central storage scenarios or distributed storage scenarios. This is not limited in embodiments.

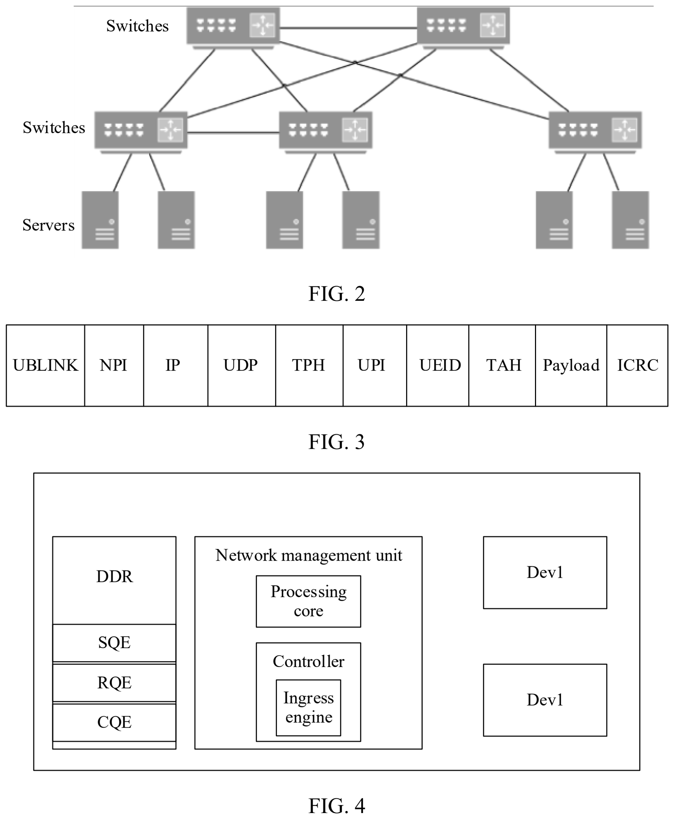

For example, a manner of accessing a configuration space register of a bus device provided in embodiments of this application may be further applied to a server cluster that can communicate across networks shown in FIG. 2, for example, a data center shown in FIG. 2. An internal structure of a switch or a server shown in FIG. 2 is shown in FIG. 1 above.

In addition, the internal bus protocols supported by the computer system in this application include the universal bus protocol, and a transport layer connection may be established between computer systems. The universal bus protocol may also be referred to as a LingQu bus protocol or a unified bus protocol, which is a bus protocol standard. The name of the universal bus protocol is not limited in this application.

The universal bus protocol breaks existing protocol barriers and eliminates unnecessary conversion overheads, thereby achieving an ultra-low delay. The universal bus protocol defines separate transaction layer and transport layer. There is a connection between transport layers, but no connection between transaction layers. All transactions in a host are carried at the transport layer. The universal bus protocol includes the transport layer and the transaction layer. The transport layer is responsible for retransmission of lost packets in a network to ensure reliable transmission, and the transaction layer processes different transactions. The transport layer receives packets from the network, removes a transport header, and forwards a packet without the transport header to the transaction layer.

FIG. 3 shows a universal bus protocol packet format. Specifically, definitions of fields in the universal bus protocol packet format are provided in Table 1:

Table 1

| Name (name) | Description (description) |
|---|---|
| Universal bus link (universal bus LINK) layer | Link (LINK) layer defined in a universal bus protocol, where the universal bus link layer may also be replaced with Ethernet MAC, and this form is defined as universal bus over Ethernet in the universal bus protocol |
| Network partition ID (Network Partition ID, NPI) | For physical network isolation |
| IP | IP protocol header |
| User datagram protocol (User Datagram Protocol, UDP) | UDP protocol header, where a UDP destination port number is 4792 indicates a universal bus packet, and the UDP protocol header is followed by a transport header (Transport Header, TPH) |

(continued)

| Name (name) | Description (description) |
|---|---|
| TPH | Transport header, including a TP opcode, a source TPN, a destination TPN, a packet sequence number (Packet Sequence Number),and the like |
| Universal bus partition ID (universal bus partition ID, UPI) | For tenant isolation |
| Universal bus entity ID (universal bus Entity ID, UEID) | Including a source entity identifier (Source Entity ID) and a destination entity identifier (Destination Entity ID), where a bit width of the entity ID is 128 bits and is unique across the entire network, and an entity identifier (EID) may indicate a virtual machine or an SSD controller |
| Transaction header (Transaction Header, TAH) | Transaction header, including a TA opcode (indicating a transaction operation type like send, read, write, atomic, or transaction acknowledgment), a destination JFR number, a transaction layer segment sequence number (Segment Sequence Number, TASSN), a read/write address, a length, and the like. |

FIG. 4 is a diagram of a structure of a host according to an embodiment of this application. The host (for example, host A shown in FIG. 4) may be used in the application scenario of cross-network communication shown in FIG. 2. As shown in FIG. 4, host A includes a network management unit, a double data rate (Double Data Rate, DDR) memory, and bus devices (for example, a device 1 (device 1, Dev1) and Dev2 shown in FIG. 4). After the system is powered on and started, the network management unit may discover Dev1 and Dev2 through scanning, and allocate a network address 1 (network address 1) and a network address 2 to Dev1 and Dev2. A specific manner in which the network management unit allocates the network addresses to Dev1 and Dev2 is not limited in this application. The network management unit scans only device ports of an entire network, for example, scans device ports of the entire network based on a hop-by-hop mechanism or a management network.

Specifically, the network management unit shown in FIG. 4 includes a processing core (core) and a controller (controller). The controller has an ingress engine (engine) of a bus device, and during system design, an address space (for example, an address space required by information such as a doorbell (doorbell), a send queue entry (Send Queue Entry, SQE), a receive queue entry (receive Queue Entry, SQE), and a completion queue entry (Completion Queue Entry, CQE)) is reserved for the ingress engine.

The foregoing briefly describes, with reference to FIG. 1 to FIG. 4, the scenario to which this application can be applied and the internal logical units of the host. For ease of understanding embodiments of this application, some basic concepts in this application are briefly described.

1. PCIe bus

As an I/O bus of a processor system, the PCIe bus has functions similar to that of an external controller interconnect (Peripheral Component Interconnect, PCI) bus, and is mainly used to connect to external devices in the processor system. The PCIe bus connects two devices at two ends of a PCIe link in an end-to-end connection manner, where the two devices are a data transmitter and a data receiver.

A typical PCIe system includes a root complex (Root Complex, RC), a PCIe switch device (PCIe switch), and a PCIe bus device. The RC may be located on a processor, and occupies one bus number. The PCIe switch includes an upstream port and a downstream port. The upstream port is configured to connect to a root port (root port, RP) of the RC or a downstream port of another PCIe switch. The root port of the RC, and the upstream port and the downstream port of the PCIe switch may also be referred to as bridge devices. A bridge device is configured to connect to another bridge device or a bus device.

It should be noted that the PCIe switch may be a separate physical device, for example, a physical switch or a switching chip; or may be a hardware function module implemented in a chip, for example, a hardware function module integrated in a processor chip to implement functions of the PCIe switch.

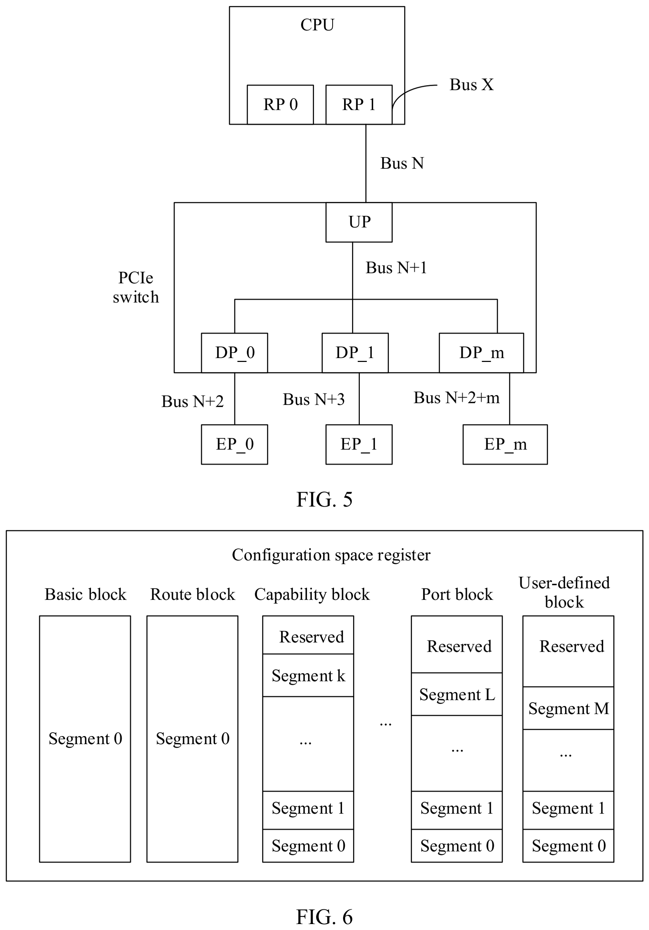

FIG. 5 is a diagram of bus number allocation in a PCIe system. A central processing unit (Central Processing Unit, CPU) has a plurality of root ports (Root Port, RP), and two RPs are used as an example in the figure. The plurality of RPs may be located on one or more RCs (not shown in the figure). For example, an RP 0 may be connected to a bus device or a bridge device (not shown in the figure). An RP 1 is connected to an upstream port (Uplink Port, UP) of the PCIe switch (switch). The PCIe switch includes m+1 downstream ports (Downlink Port, DP) marked as DP_0, DP_1, ..., and DP_m.

Each downstream port is connected to one bus device. Bus devices shown in FIG. 1 are marked as EP_0, EP_1, ..., and EP_m. For example, the root port RP 1 connected to the upstream port UP occupies a bus X, and a link (link) between the RP 1 and the UP occupies a bus N. In this case, a link from the upstream port inside the PCIe switch to the m+1 downstream ports occupies a bus N+1, and links between downstream ports and corresponding bus devices respectively occupy a bus N+2, a bus N+3, ..., and a bus N+2+m. X is an integer greater than or equal to 0, and N is an integer greater than X. For example, when the two RPs shown in the figure are located in different RCs, and an RC on the left side of the RP 0 is first enumerated, a value of X depends on a bus number occupied by a PCIe structure under the left RC. For example, when the PCIe structure under the left RC occupies five bus numbers (that is, buses 0 to 4 are occupied by the left RC and the PCIe structure under the left RC), a value of X is 5, and a value of N is 6. When the two RPs shown in the figure are located in a same RC, and the RC is an RC that is first enumerated by the processor, a value of X is 0. If a PCIe structure under a left RC occupies five bus numbers (that is, buses 0 to 4 are occupied by the RC and a PCIe structure under the RP 0), a value of N is 5.

The PCIe device may be classified into two types. One type is a bridge device, for example, a root port RP, an upstream port, or a downstream port, and the other type is a bus device (Endpoint, EP). At both ends of a PCI bridge, two buses are connected a primary bus (Primary Bus) and a secondary bus (Secondary Bus). A PCIe bridge may manage a PCIe subtree under the PCIe bridge. The bridge device has a subordinate bus number register, a secondary bus number register, and a primary bus number register. The primary bus number register stores a PCIe bus number of an upstream of the bridge device, the secondary bus number register stores a PCIe bus number of a downstream of the bridge device, and the subordinate bus number register stores a PCIe bus number that is the largest number in the PCIe subtree of the downstream of the bridge device. A subordinate bus number is referred to as a subordinate bus number.

Typically, in PCIe protocols, a 32-bit (bits) PCIe identifier (identifier, ID) is used to identify a PCIe device in a system. The 32-bit identifier includes a 16-bit domain (domain) identifier, an 8-bit bus (bus) identifier, a 5-bit device (device) identifier, and a 3-bit function (function) identifier. The 8-bit bus identifier bus ID, the 5-bit device identifier device ID, and the 3-bit function identifier function ID are collectively referred to as BDF for short. The bus ID provides 256 bus numbers for each PCIe domain. Typically, a computer system supports only one PCIe domain, that is, the entire computer system provides 256 bus numbers.

FIG. 5 merely shows an example of possible bus allocation in a PCIe system, to indicate a bus number allocation status. This does not constitute any limitation on the protection scope of this application.

2. PCIe device enumeration: A process of discovering all devices on a PCIe bus through scanning is referred to as a PCIe device enumeration process. Since the personal computer (Personal Computer, PC) was invented by International Business Machines (International Business Machines, IBM) in 1981, a mainboard has an expansion slot for computer expansion. Currently, a most common expansion slot is a PCIe slot. In a computer mainboard chip, most hardware control modules are mounted to one or more PCI or PCIe device trees in a form of PCIe devices. Firmware and an operating system discover most plug-and-play devices by enumerating the device trees.

After the computer system is reset or powered on, software first needs to scan the PCIe bus to enumerate all devices connected to the bus. Before scanning, the software can sense a device, namely, a host/PCI bridge, and learn that a bus number of the host/PCI bridge is 0.

A configuration space register of each PCIe function has a vendor (Vendor) identifier (identifier, ID) read-only register. A vendor ID is a 16-bit specific value allocated by the peripheral component special interest group (Peripheral Component Interconnect Special Interest group, PCI-SIG) to each vendor. In the PCIe device enumeration process, the system software traverses all possible bus & device & function combinations and attempts to read a vendor ID register corresponding to each bus & device & function. Whether a function corresponding to a bus & device & function exists may be determined based on a read result. In short, the PCIe device enumeration process is a process in which the system software accesses a configuration space register of a PCIe device.

3. Configuration space: In an early PCI stage, a size of a configuration space allocated by a system to each PCIe device is 256 bytes (bytes). In a PCIe stage, as device performance is improved, a configuration space of a PCIe device is extended to 4K bytes. It should be noted that PCIe supports 256 buses, 32 devices, and 8 functions in total. In a case of full load, a size of a required configuration space is equal to 4K * 256 * 32 * 8 = 256 M. The 256 M configuration space is prepared for the PCIe device, and unavailable for the system. Specifically, the PCIe device is backward compatible with PCI, first 256 bytes of the configuration space of each PCIe device are a PCI space, and last (256-4K) bytes are a PCIe extended space.

Each PCIe device has an independent configuration space, and the configuration space belongs to the PCIe device. The system configures a memory space for the device. When a CPU accesses the memory space, the CPU accesses the configuration space of the PCIe device.

For example, at delivery, the configuration space of a PCIe device has a default initial value.

4. I/O access and memory access: In an X86 system, address mapping of the configuration space of the PCIe device includes I/O mapping and memory mapping, and the configuration space of the PCIe device may be accessed through I/O access and memory access.

Specifically, access to the configuration space of the PCIe device depends on a bus, device, function numbering manner of the PCIe device, where bit[23:16] indicates a bus number, is used to store a bus number, includes 8 bits (bit) in total, and may be used to store 256 bus numbers; bit[15:11] indicates a device number, is used to store a device number, includes 5 bits (bit) in total, and may be used to store 32 device numbers; bit[10:8] indicates a function number, is used to store a function number, includes 3 bits (bit) in total, and may be used to store 8 function numbers. This may also explain why PCIe supports 256 buses, 32 devices, and 8 functions. In addition, bit[31] indicates an enabled (enabled) bit, bit[7:2] indicates a register number of a configuration space, and bit[1:0] remains to be "00".

According to the protocol, the X86 system uses two I/O port registers: config_address (a physical address is 0CF8h) and config_data (a physical address is CFCh) to access the configuration space of the PCIe device. In the assembly language, OUT and IN are port read and write instructions. Ports are used for data exchange between a host and peripherals, and are classified into a data port, a status port, and a control port. A PC allocates an address to each port, and all ports are arranged linearly, to form an I/O address space that is independent of the memory space and that is usually represented in hexadecimal. For example, a range of a port address is from 0000H to FFFFH.

For example, BDF is written into a port CF8h, so that content of the configuration space of the PCIe device may be written into or read from CFCh.

I/O access can be simply understood as that a user accesses a storage space according to the input or output (IN/OUT) instruction, some PCIe devices may be mapped to the I/O space, and developers perform accessing through an I/O port. For example, the first 256 bytes of the PCIe device are accessed through the port CF8h/CFCh.

It should be understood that the I/O access mechanism can access only the first 256 bytes in the 4K-byte configuration space of the function.

For ease of understanding, how to access the configuration space of the PCI device through I/O access is described by using a specific example.

Example 1

Step 1: A bus number of a PCI device is written into [23:16] bits of an I/O address CF8h, a device number of the PCI device is written into [15:11] bits of the I/O address CF8h, and a function number of the PCI device is written into [10:8] bits of the I/O address CF8h. A double-word address of a to-be-accessed register is written into [7:2] bits of the I/O address CF8h, and the most significant bit of CF8h is a configuration bit and is set to 1.

Step 2: For a write operation, specific information of the device is combined into a double word (4 bytes), and then the double word is written into an address CFCh. For a read operation, the specific information of the device is combined into a double word, and then data is read from CFCh.

The first 255 bytes of the configuration space of the PCIe device can be accessed through I/O access.

Memory mapping means that all configuration spaces of the PCIe device are mapped to a memory. After determining an address of the device, the user may access the configuration space of the PCIe device in a memory read/write manner. During memory mapping, a 4K-byte address space can be accessed, but the access operation is a memory access operation.

Specifically, when software accesses a configuration space of a specified PCIe device, a specific address obtained by mapping the configuration space to a memory needs to be correctly calculated. An address of bus No=0, device No=0, and func No=0 is a BAR. A maximum space occupied by a bus is calculated as follows:

$$SIZE\_PER\_BUS = 4K * 32 * 8 = 256K = 1M = 100000h$$

$$SIZE\_PER\_DEVICE = 4K * 8 = 8000h$$

$$SIZE\_PER\_FUNC = 4K = 1000h$$

The following shows a formula for calculating a memory address via which the software accesses the configuration space, accessed by the software, of the PCIe device whose bus number is bus No, device number is Dev No, and function number is func No:

Memory Address = PCIe Configuration Register Base Address Register (BAR) + busNo * SIZE_PER_BUS + devNo * SIZE_PER_DEVICE + funcNo * SIZE_PER_FUNC + offset

For ease of understanding, how to access the configuration space of the PCI device through memory access is described by using a specific example.

Example 2: The software accesses a configuration space of a PCIe device whose bus number bus No is 15h, device number Dev No is 00h, function number func No is 05h, and register offset (offset) is 84h.

Step 1: Calculate a to-be-accessed memory address according to the foregoing calculation formula of the configuration space of the PCIe device:

$$\text{Memory Address} = \text{F0000000h} + 15\text{h} * 100000\text{h} + 00\text{h} * 8000\text{h} + 05\text{h} * 1000\text{h} + 84\text{h} = \text{F1505084h}$$

Step 2: After the memory address of the device is determined, the configuration space of the PCIe device may be accessed in the memory read/write manner.

5. Bus device enumeration: A process of discovering all devices on a universal bus through scanning is referred to as a bus device enumeration process. Similar to the foregoing PCIe device enumeration process, the bus device enumeration process may also be understood as a process in which system software accesses a configuration space register of a bus device.

6. Configuration space register of a bus device: In this application, the configuration space register of the bus device may also be referred to as a space register of the bus device, or referred to as a bus configuration space, a bus device space, or the like for short. It should be understood that resources, configuration, and management of the bus device mainly include public configuration management, resource configuration management, and interconnection configuration management of a physical device, an internal task queue resource, a memory resource, a network resource, and the like. When device resources are pooled, each host does not need to manage public configuration, resource configuration, and interconnection configuration of the device, but uses resources such as a memory resource and a network resource in the device.

For ease of understanding, the configuration space register of the bus device is briefly described with reference to FIG. 6 and (a) in FIG. 7.

As shown in FIG. 6, there are different types of configuration space registers of the bus device, and different types of registers correspond to different address blocks. Specifically, the configuration space register is divided into different address blocks (for example, a basic block (basic block), a route block (route block), a capability block (capability block), a port block (port block), a user-defined block (user-defined block), and the like shown in FIG. 6). Different address blocks correspond to different types of configuration space registers. In other words, different types of registers correspond to different address ranges.

As shown in (a) in FIG. 7, an address block corresponding to a type of register may be divided into different segments (segment), different segments correspond to different address spaces, and one segment includes a reserved (reserved) bit and a register corresponding to a 4K-byte address space.

In addition, for ease of understanding embodiments of this application, the following several descriptions are provided.

First, "at least one" shown in this application means one or more, and "a plurality of" means two or more. In addition, "first", "second", and various numerical numbers (for example, "#1" and "#2") in embodiments of this application are merely used to distinguish between objects for ease of description, but are not intended to limit the scope of embodiments of this application. Sequence numbers in the following processes do not mean execution sequences. The execution sequences of the processes should be determined based on functions and internal logic of the processes, and should not constitute any limitation on implementation processes of embodiments of this application. It should be understood that, objects described in this way may be interchangeable in proper cases, so that solutions other than embodiments of this application can be described. In addition, in embodiments of this application, words such as "S810" are merely identifiers for ease of description, and do not limit a sequence of performing steps.

Second, in embodiments of this application, the terms such as "example" or "for example" are used to represent giving an example, an illustration, or a description. Any embodiment or design scheme described as "example" or "for example" in this application should not be explained as being more preferred or having more advantages than another embodiment or design scheme. To be precise, use of the word such as "example" or "for example" is intended to present a relative concept in a specific manner.

Third, "store" in embodiments of this application may be storage in one or more memories. The one or more memories may be separately disposed, or may be integrated into an encoder, a decoder, a processor, or a communication apparatus. Alternatively, some of the one or more memories may be separately disposed, and some may be integrated into a decoder, a processor, or a communication apparatus. A type of the memory may be a storage medium in any form. This is not limited in this application.

Fourth, in embodiments of this application, a term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their combinations not excluded.

Fifth, "if" in embodiments of this application may be explained as "when" ("when" or "upon"), "in response to determining", or "in response to detecting". Similarly, based on the context, a phrase "if determining" or "if detecting (a stated condition or event)" may be interpreted as a meaning of "when determining", "in response to determining", "when detecting (the stated condition or event)", or "in response to detecting (the stated condition or event)".

Sixth, in embodiments of this application, the terms used in the descriptions of the various examples are merely intended to describe specific examples and are not intended to impose a limitation. Terms "one" ("a" and "an") and "the" of singular forms used in the descriptions of the various examples and the appended claims are also intended to include plural forms, unless otherwise specified in the context clearly.

Seventh, the term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between associated objects.

The foregoing briefly describes, with reference to FIG. 1, the scenario to which the communication method provided in this application is applicable, and describes the basic concepts in this application. I/O access and memory access are also described in the basic concepts. When a configuration space register of a bus device (for example, a PCIe device) is accessed in the memory access manner, after an access instruction is sent, a processor is in a waiting state, an access delay is limited, and another host cannot access the configuration space register. For example, the foregoing memory access manner is not applicable to a multi-host application scenario. Because one host has one set of bus numbers, and two hosts have two sets of bus numbers, the memory access manner is applicable to accessing only a configuration space register in a single-host service scenario.

This application provides a communication method. When a network management unit needs to access the configuration space register of the bus device, the network management unit may include a network address and information about the to-be-accessed configuration space register of the bus device in a request message, to access the configuration space register of the bus device. Access does not need to be performed in the memory read/write manner. Therefore, the way of accessing the configuration space register of the bus device via the request message provided in the technical solution avoids the disadvantages of the memory read/write manner, that is, stringent delay requirements and inability of perform cross-host access.

The following describes in detail the communication method provided in this application with reference to the accompanying drawings. It should be understood that the communication method provided in embodiments of this application may be applied to a computer system, for example, the cross-network access system shown in FIG. 2.

It should be further understood that a specific structure of an execution body of the method provided in embodiments of this application is not particularly limited in the following embodiments, provided that a program that records code of the method provided in embodiments of this application can be run to implement the method provided in embodiments of this application. For example, the execution body of the method provided in embodiments of this application may be a device, or may be a functional module that is in the device and that can invoke a program and execute the program.

FIG. 8 is a schematic flowchart of a communication method according to this application. The communication method may be applied to the bus network shown in (b) in FIG. 7. The bus network includes a network management unit and at least one bus device (for example, the bus device #1, the bus device #2, ..., and the bus device #n shown in (b) in FIG. 7). In addition, the network management unit and the bus device are connected through a universal bus. The bus network may include a plurality of hosts, and the bus network may be understood as a wired bus network to distinguish the network from a wireless network.

Specifically, the communication method includes the following steps.

S810: The network management unit sends a request message to the bus device. In other words, the bus device receives the request message from the network management unit.

Specifically, in this embodiment, the network management unit and the bus device are connected through the universal bus. For example, in this embodiment, the universal bus is used as a local bus of the bus network to connect the bus device (which may also be referred to as an external device, an endpoint device, or the like) in the bus network.

The request message includes a network address, first indication information, and information about a first configuration space register of the bus device.

The network address (network address) of the bus device is an address allocated by the network management unit to the bus device. Specifically, the bus network may include the at least one bus device. It should be noted that, in this embodiment, before the network management unit accesses the configuration space register of the bus device, the network management unit may discover the bus device in the bus network, and allocate the network address to the bus device.

For example, the bus network includes the network management unit, the bus device #1, the bus device #2, and the bus device #3. The network management unit may allocate a network address #1 to the bus device #1, allocate a network address #2 to the bus device #2, and allocate a network address #3 to the bus device #3. When the network management unit needs to access the bus device #1, the network management unit sends a request message #1 to the bus device #1, and includes the network address #1 in the request message #1. Similarly, when the network management unit needs to access the bus device #2, the network management unit sends a request message #2 to the bus device #2, and includes the network address #2 in the request message #2; and when the network management unit needs to access the bus device #3, the network management unit sends a request message #3 to the bus device #3, and includes the network address #3 in the request message #3.

The first indication information indicates a type of an operation performed on the first configuration space register. For example, when the network management unit performs a read operation on the first configuration space register of the bus device based on the request message, the first indication information indicates read (read). When the network management unit performs a write operation on the first configuration space register of the bus device based on the request message, the first indication information indicates write (write). The write operation includes but is not limited to addition or modification.

For example, when the first indication information indicates that the type of the operation performed on the first configuration space register is the write operation, the request message may further include data to be written into the first configuration space register.

For example, the network management unit requests, based on the request message, to write data #1 into the first configuration space register of the bus device. In this case, the request message carries the data #1.

For example, when the first indication information indicates that the type of the operation performed on the first configuration space register is the write operation, the request message may further include second indication information, and the second indication information indicates to write the data into at least one byte of the first configuration space register.

For example, a size of the first configuration space register is 4 bytes. The network management unit may request, based on the request message, to write the data #1 into 2 bytes of the first configuration space register of the bus device. The request message carries the data #1 and the second indication information, and the second indication information indicates to write the data #1 into any two bytes of the first configuration space register.

The information about the first configuration space register indicates the first configuration space register, and is information related to the first configuration space register.

For example, the information about the first configuration space register includes at least one of the following: type information of the first configuration space register, an index of the first configuration space register, or an address of the first configuration space register.

The type information of the first configuration space register is used to identify a type of a first configuration space register of a to-be-accessed bus device. As shown in FIG. 6, configuration space registers locally configured by the bus device in this application may include different types of configuration space registers, and different types of configuration space registers correspond to different types of address blocks. Therefore, the request message may carry the type information of the configuration space register, to accurately indicate an address corresponding to the to-be-accessed configuration space register. For example, the type information of the first configuration space register indicates that a type of the first configuration space register of the to-be-accessed bus device is a basic register. In this case, an address block accessed by an access message is a segment 0 (segment0) corresponding to the basic block (basic block) shown in FIG. 6.

In addition, the address of the first configuration space register indicates an address of the first configuration space register of the to-be-accessed bus device. It should be understood that a configuration space register may include a plurality of address segments. As shown in (a) in FIG. 7, an address block corresponding to the configuration space register includes a plurality of segments, different segments have different addresses, and address information of the first configuration space register may indicate in detail the address of the first configuration space register of the accessed bus device.

It should be understood that a specific form of the information about the first configuration space register is not limited in this embodiment, and information that can indicate the first configuration space register falls within the protection scope of this application.

Further, the request message further includes a task identifier (identifier, ID), the task identifier is used to identify the request message, and different request messages may carry different task identifiers. For example, a task identifier carried in the request message #1 may be an identifier #1, and a task identifier carried in the request message #2 may be an identifier #2. The task identifier may alternatively be a tag (tag).

For example, in this embodiment, the network management unit may access a plurality of configuration space registers of the bus device based on the request message, to improve access efficiency. For ease of description, the following uses an example in which the request message is further used to request to access a second configuration space register of the bus device for description.

Specifically, when the request message is further used to request to access the second configuration space register of the bus device, the request message further includes third indication information and information about the second configuration space register, and the third indication information indicates a type of an operation performed on the second configuration space register.

For example, when the network management unit performs a read operation on the second configuration space register of the bus device based on the request message, the third indication information indicates read (read). When the network management unit performs a write operation on the second configuration space register of the bus device based on the request message, the third indication information indicates write (write).

For example, when the third indication information indicates that the type of the operation performed on the second configuration space register is the write operation, the request message may further include data to be written into the second configuration space register.

For example, the network management unit requests, based on the request message, to write data #2 into the second configuration space register of the bus device. In this case, the request message carries the data #2.

For example, when the third indication information indicates that the type of the operation performed on the second configuration space register is the write operation, the request message may further include fourth indication information, and the fourth indication information indicates to write the data into at least one byte of the second configuration space register.

For example, a size of the second configuration space register is 4 bytes. The network management unit may request, based on the request message, to write the data #2 into 2 bytes of the second configuration space register of the bus device. The request message carries the data #2 and the fourth indication information, and the fourth indication information indicates to write the data #2 into any two bytes of the second configuration space register.

Optionally, when the network management unit performs a same operation on different configuration space registers of the bus device based on the request message, the first indication information and the third indication information may be same information, and the second indication information and the fourth indication information may also be same information.

For example, the information about the second configuration space register includes at least one of the following: type information of the second configuration space register, an index of the second configuration space register, or an address of the second configuration space register. For related descriptions of the information about the second configuration space register, refer to the foregoing descriptions of the information about the first configuration space register. Details are not described herein again.

Optionally, when the network management unit requests, based on the request message, to access the plurality of configuration space registers of the bus device, information that is used to access the plurality of configuration space registers and that is carried in the request message separately forms a plurality of access requests. For example, when the request message is used to request to access the first configuration space register and the second configuration space register, information (for example, the first indication information, the information about the first configuration space register, and the second indication information) that is carried in the request message and that supports access to the first configuration space register is referred to as an access request #1, and information (for example, the third indication information, the information about the second configuration space register, and the fourth indication information) that is carried in the request message and that supports access to the second configuration space register is referred to as an access request #2.

It should be understood that the foregoing uses an example in which the network management unit requests, based on the request message, to access the first configuration space register and the second configuration space register of the bus device to describe a case in which the network management unit may access the plurality of configuration space registers based on one request message. This does not constitute any limitation on the protection scope of this application. In this embodiment, the network management unit may request, based on the request message, to access another configuration space register of the bus device. For example, the request message further includes an access request #3 that supports access to a third configuration space register. Details are not described herein.

For example, the network management unit in this embodiment includes a processing core and a controller. That the network management unit sends the request message to the bus device includes: The controller in the network management unit sends the request message to the bus device. It should be noted that, in this embodiment, an operation performed by the network management unit may be implemented by system software, and the following operations performed by the processing core and the controller may be implemented by the system software.

In this embodiment, before the controller sends the access request message to the bus device, message transmission inside the network management unit includes the following steps.

Step 1: The processing core sends a descriptor of the request message to a DDR memory.

Specifically, the processing core uses related information of the configuration space register of the to-be-accessed bus device as the descriptor of the request message, and a send queue entry (Send Queue Entry, SQE) in the DDR memory carries the descriptor of the request message.

Step 2: The processing core sends indication information #1 to the controller. The indication information #1 is used to notify the controller of a to-be-executed task. Specifically, the indication information #1 indicates the controller to obtain the descriptor of the request message from the DDR memory.

For example, the controller has an ingress engine (engine), and during design, a system reserves an address space for the ingress engine (for example, reserves an address space required by obtaining and storing information such as a doorbell (doorbell), the SQE, a receive queue entry (receive Queue Entry, SQE), and a completion queue entry (Completion Queue Entry, CQE)). The processing core sends the doorbell to notify the ingress engine in the controller of the to-be-executed task.

Step 3: The controller obtains the descriptor of the request message from the DDR memory.

Specifically, the ingress engine in the controller obtains the descriptor of the request message from the DDRmemory. For example, the ingress engine in the controller reads the SQE in the DDR memory, and obtains the descriptor of the request message from the SQE.

Step 4: The controller generates the request message.

In this embodiment, after obtaining the descriptor of the request message, the ingress engine in the controller encapsulates the descriptor of the request message into a request message on a bus device. For related descriptions of the request message, refer to the descriptions of the request message in S810. Details are not described herein again.

In this embodiment, the processing core is supported in continuously delivering a plurality of descriptor tasks, and the controller is also supported in having a plurality of software/hardware interface queues. Both the controller and the bus device support sending and receiving of a plurality of request messages, to improve performance.

Further, in this embodiment, after receiving the access request message, the bus device parses the access request message and executes a corresponding operation request, and returns an access response message. The method shown in FIG. 8 further includes the following step.

S820: The bus device sends a response message to the network management unit. In other words, the network management unit receives the response message from the bus device.

Specifically, the response message carries the task identifier. The bus device includes the task identifier in the response message, so that the network management unit can determine, based on the task identifier carried in the response message, whether the response message is a message in response to a request message.

For example, the task identifier carried in the request message #1 sent by the network management unit to the bus device #1 is the identifier #1, and the task identifier carried in the request message #2 sent by the network management unit to the bus device #2 is the identifier #2. After receiving the request message #1, the bus device #1 may send a response message #1 to the network management unit in response to the request message #1. The response message #1 carries the identifier #1, and the identifier #1 indicates that the response message #1 is a message in response to the request message #1.

Similarly, after receiving the request message #2, the bus device #2 may send a response message #2 to the network management unit in response to the request message #2. The response message #2 carries the identifier #2, and the identifier #2 indicates that the response message #2 is a message in response to the request message #2. Therefore, the network management unit may determine, based on the identifier #1 carried in the response message #1, that the response message #1 is a message in response to the request message #1, and determine, based on the identifier #2 carried in the response message #2, that the response message #2 is a message in response to the request message #2.

In a possible implementation, the response message indicates whether the operation performed on the configuration space register succeeds.

For example, the request message is used to request to perform a write operation on the first configuration space register. If the bus device successfully writes, into the first configuration space register, the data #1 that is carried in the request message and that is to be written into the first configuration space register, the response message indicates that the write operation performed on the first configuration space register succeeds.

For another example, the request message is used to request to perform write operations on the first configuration space register and the second configuration space register. If the bus device successfully writes, into the first configuration space register, the data #1 that is carried in the request message and that is to be written into the first configuration space register, and successfully writes, into the second configuration space register, the data #2 that is carried in the request message and that is to be written into the second configuration space register, the response message indicates that the write operations performed on the first configuration space register and the second configuration space register succeed.

For still another example, the request message is used to request to perform write operations on the first configuration space register and the second configuration space register. If the bus device successfully writes, into the first configuration space register, the data #1 that is carried in the request message and that is to be written into the first configuration space register, and fails to write, into the second configuration space register, the data #2 that is carried in the request message and that is to be written into the second configuration space register, the response message indicates that the write operation performed on the first configuration space register succeeds and the write operation performed on the second configuration space register fails (for example, the response message includes two response fields that respectively indicate whether the operations performed on the two configuration space registers succeed).

It should be understood that the foregoing is merely an example for describing how the response message indicates whether the operation performed on the configuration space register succeeds, and does not constitute any limitation on the protection scope of this application. The response message may alternatively indicate, in another manner, whether operations on different configuration space registers succeed. Examples are not enumerated herein.

In another possible implementation, if the type of the operation performed on the first configuration space register is the read operation, the response message includes information read from the configuration space register.

For example, the request message is used to request to perform a read operation on the first configuration space register, the response message includes information read from the first configuration space register.

For another example, if the request message is used to request to perform read operations on the first configuration space register and the second configuration space register, the response message includes information read from the first configuration space register and the second configuration space register.

Optionally, the response message further includes information indicating that the response message is in response to the read operation or the write operation.

Optionally, when the bus device responds, via the response message, to the network management unit accessing the plurality of configuration space registers of the bus device, the response message includes a plurality of access responses. For example, when the request message is used to request to access the first configuration space register and the second configuration space register, and the response message is in response to the request message, a response for accessing the first configuration space register in the response message is referred to as an access response #1, and a response for accessing the second configuration space register in the response message is referred to as an access response #2.

In addition, a specific operation performed after the network management unit receives the response message is not limited in this embodiment. For example, after receiving the response message, the network management unit may write information carried in the response message into the RQE, where the RQE is carried in the CQE. The controller reports, to the processing core, an interrupt that indicates a to-be-processed RQE. Then, the processing core reads the CQE, processes the RQE, and determines an execution status of the descriptor through task identifier matching.

In the communication method shown in FIG. 8, when the network management unit needs to access the configuration space register of the bus device, the network management unit may include the network address and the information about the to-be-accessed configuration space register of the bus device in the request message, to access the configuration space register of the bus device. Access does not need to be performed in the memory read/write manner. Therefore, the way of accessing the configuration space register of the bus device via the request message provided in the technical solution avoids the disadvantages of the memory read/write manner, that is, stringent delay requirements and inability of perform cross-host access.

For example, when the configuration space register of the bus device is accessed based on the request message, the network management unit sends an access message instead of a memory access instruction, and a delay requirement is low. For another example, when the configuration space register of the bus device is accessed based on the request message, the bus device is routed based on the network address of the bus device instead of a memory address of the bus device, and access is not limited by memory address allocation in a single host. Therefore, another host can access the configuration space register of the bus device based on the request message.

For still another example, the configuration space register of the bus device is accessed based on the network address of the bus device. In comparison with the memory access manner described in the foregoing basic concepts, decoding logic from the memory address to the bus number, the device number, and the function number does not need to be implemented based on hardware logic, to reduce consumption of hardware resources. In addition, memory access is synchronous access. After initiating access, the CPU waits for completion of the access. Therefore, there is a requirement on response return time of the access, and the response return time cannot be too long, and is usually within 1 $\mu$s. Message access shown in FIG. 8 is asynchronous access, that is, the CPU does not need to wait. Therefore, a delay requirement is low, and a delay of several microseconds to dozens of microseconds is supported. In this way, the message access shown in FIG. 8 is more applicable to large-scale networking.

It should be noted that the request message and the response message are transaction layer messages. For a format of the transaction layer message, refer to a specification in a current protocol (for example, as shown in Table 1). Details are not described herein again. This embodiment mainly relates to a design of a message header (header) and a payload (payload) of the transaction layer message.

The following describes in detail the design of the header and the payload of the transaction layer message in this embodiment with reference to FIG. 9 to FIG. 12.

The transaction layer message includes the header and the payload. A size of the header is fixed to 4 bytes, and a size of the payload is N*4 bytes, where N is a positive integer. As shown in FIG. 9, the transaction layer message is divided into two parts: the header and the payload.

For example, when the transaction layer message is the foregoing request message, the header of the transaction layer message indicates, based on a message code (Message Code) and a sub-message code (Sub-Message Code), that the transaction layer message is a message for accessing the configuration space register. The sub-message code is optional, that is, the header of the transaction layer message may not carry the sub-message code.

The task identifier is used to match the request message and the response message.

A message payload length (Message Payload length) in the header of the transaction layer message specifies a length of a message payload (Message Payload).

As shown in FIG. 10, the header of the transaction layer message includes a message code field, a sub-message code field, a task ID field, and a message payload length field.

In a possible implementation, the transaction layer message is the foregoing request message, and the payload of the request message may include a plurality of access requests that are used to separately access different configuration space registers of the bus device. Optionally, each of the plurality of access requests in the request message may occupy a fixed size of 4 bytes.

In this implementation, a structure of each access request is shown in FIG. 11. The access request includes an opcode field, a byte enable field, a block type field, a function entity index field, a request address field, and a write data field. A function of each field is shown as follows:

The opcode field describes a read/write type of the request, for example, indicates a read or write operation, and may be understood as the first indication information or the third indication information.

It should be noted that, if the read/write types requested by the plurality of access requests in the request message are the same, the read/write type may be indicated by the sub-message code in the message header, that is, the opcode field in the access request is optional. For example, the request message includes one access request, and the access request is used to request read. In this case, the sub-message code may indicate that the read/write type is a read operation. For another example, the request message includes a plurality of access requests, and the plurality of access requests are all used to request read. In this case, the sub-message code may indicate that the read/write type is a read operation.

The byte enable field describes which bytes are accessed by the request, for example, indicates to access 2 bytes of the first configuration space register, and may be understood as the second indication information or the fourth indication information.

The block type field, the function entity index field, and the request address field describe a configuration space register of a device, and may be understood as the information about the first configuration space register or the information about the second configuration space register.

The write data field describes to-be-written data. If the request message is used to request to write the data #1 into the first configuration space register, the access request for the first configuration space register carries the data #1.

In another possible implementation, the transaction layer message is the foregoing response message, and the payload of the response message may include a plurality of access responses that respectively respond to a plurality of access requests in the request message. Optionally, each of the plurality of access responses in the response message may occupy a fixed size of 4 bytes.

In this implementation, a structure of each access response is shown in FIG. 12. The access response includes an opcode field, a status field, and a read data field. A function of each field is shown as follows:

The opcode field describes a read/write type of a request corresponding to the response. For example, the access request #1 in the request message is a read operation request. In this case, the access response #1 that is in the response message and that is in response to the access request #1 is a response to a read operation.

The status field describes an execution status of the request corresponding to the response, for example, whether an operation succeeds.

The read data field describes read data of the response. If the access request #1 in the request message is a read operation request, the access response #1 that is in the response message and that is in response to the access request #1 carries the read data.

In this embodiment, the access request message one-to-one corresponds to the access response message.

It should be understood that the specific examples shown in FIG. 8 in embodiments of this application are merely intended to help a person skilled in the art better understand embodiments of this application, but not to limit the scope of embodiments of this application. It should be understood that sequence numbers of the foregoing processes do not mean a sequence of performing the processes. The sequence of performing the processes should be determined based on functions and internal logic of the processes, and should not be construed as any limitation on the implementation processes of the embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

The foregoing mainly describes the solutions provided in embodiments of this application from the perspective of the method. To implement the foregoing functions, corresponding hardware structures and/or software modules for performing the functions are included. A person skilled in the art should easily be aware that, in combination with units and algorithm steps of the examples described in embodiments disclosed in this specification, this application may be implemented by hardware or a combination of hardware and computer software. Whether a function is executed by hardware or hardware driven by computer software depends on particular applications and design constraint conditions of the technical solutions. A person skilled in the art may use different methods to implement the described functions for each specific application. However, it should not be considered that the implementation goes beyond the scope of this application.

Communication apparatuses provided in embodiments of this application are described in detail below with reference to FIG. 13 to FIG. 15. It should be understood that descriptions of apparatus embodiments correspond to the descriptions of the method embodiments. Therefore, for content that is not described in detail, refer to the foregoing method embodiments. For brevity, some content is not described again.

In embodiments of this application, functional modules of a transmit end device or a receive end device may be divided based on the foregoing method examples. For example, functional modules may be divided based on functions, or two or more functions may be integrated into one processing module. The integrated module may be implemented in a form of hardware, or may be implemented in a form of a software functional module. It should be noted that, in embodiments of this application, division into the modules is an example, and is merely logical function division. During actual implementation, another division manner may be used. An example in which each functional module is obtained through division based on each corresponding function is used below for description.

FIG. 13 is a diagram of a structure of a communication apparatus 1300 according to an embodiment of this application.

For example, the communication apparatus 1300 may be the foregoing network management unit, and the communication apparatus 1300 may be configured to perform the foregoing communication method, for example, configured to perform the method shown in FIG. 8. The communication apparatus 1300 may include a transceiver unit 1310 and a processing unit 1320.

The transceiver unit 1310 is configured to send a request message to a bus device. The request message is used to request to access a first configuration space register of the bus device, the request message includes a network address, first indication information, and information about the first configuration space register of the bus device, the network address is an address allocated by the network management unit to the bus device, and the first indication information indicates a type of an operation performed on the first configuration space register. The transceiver unit 1310 is configured to receive a response message from the bus device in response to the request message.

For example, with reference to FIG. 8, the transceiver unit 1310 may be configured to perform S810 and S820.

For another example, the communication apparatus 1300 may be the foregoing bus device, and the communication apparatus 1300 may be configured to perform the foregoing communication method, for example, configured to perform the method shown in FIG. 8.

The transceiver unit 1310 is configured to receive a request message from a network management unit. The request message is used to request to access a first configuration space register of the bus device, the request message includes a network address, first indication information, and information about the first configuration space register of the bus device, the network address is an address allocated by the network management unit to the bus device, and the first indication information indicates a type of an operation performed on the first configuration space register. The transceiver unit 1310 is configured to send a response message to the network management unit in response to the request message.

For example, with reference to FIG. 8, the transceiver unit 1310 may be configured to perform S810 and S820.

An embodiment of this application further provides a chip system 1400. As shown in FIG. 14, the chip system 1400 includes at least one processor and at least one interface circuit. For example, when the chip system 1400 includes one processor and one interface circuit, the processor may be a processor 1410 shown in a solid-line box (or a processor 1410 shown in a dashed-line box) in FIG. 14, and the interface circuit may be an interface circuit 1420 shown in a solid-line box (or an interface circuit 1420 shown in a dashed-line box) in FIG. 14.

When the chip system 1400 includes two processors and two interface circuits, the two processors include the processor 1410 shown in the solid-line box and the processor 1410 shown in the dashed-line box in FIG. 14. The two interface circuits include the interface circuit 1420 shown in the solid-line box and the interface circuit 1420 shown in the dashed-line box in FIG. 14. This is not limited. The processor 1410 and the interface circuit 1420 may be connected to each other through a wire. For example, the interface circuit 1420 may be configured to receive a signal (for example, instructions stored in a memory). For another example, the interface circuit 1420 may be configured to send a signal to another apparatus (for example, the processor 1410).

For example, the interface circuit 1420 may read instructions stored in the memory, and send the instructions to the processor 1410. When the instructions are executed by the processor 1410, the communication apparatus or a memory access apparatus may be enabled to perform the steps in the foregoing embodiments. Certainly, the chip system 1400 may further include another discrete component. This is not specifically limited in embodiments of this application.

Another embodiment of this application further provides a computer-readable storage medium. The computer-readable storage medium stores instructions. When the instructions are run on a communication apparatus, the communication apparatus performs the steps performed by the communication apparatus in the method procedures shown in the foregoing method embodiments. In some embodiments, the disclosed methods may be implemented as computer program instructions encoded in a machine-readable format on the computer-readable storage medium or encoded on another non-transitory medium or product.

FIG. 15 schematically shows a conceptual partial view of a computer program product according to an embodiment of this application. The computer program product includes a computer program for executing a computer process on a computing device.

In an embodiment, the computer program product is provided through a signal-carrying medium 1000. The signal-carrying medium 1500 may include one or more program instructions, and when the program instructions are run by one or more processors, the functions or a part of the functions described above in FIG. 8 may be provided. Therefore, for example, one or more features in FIG. 8 may be borne by one or more instructions associated with the signal-carrying medium 1500. In addition, the program instructions in FIG. 15 also describe example instructions.

In some examples, the signal-carrying medium 1500 may include a computer-readable medium 1501, for example but not limited to, a hard disk drive, a compact disk (CD), a digital video disc (DVD), a digital tape, a memory, a read-only memory (read-only memory, ROM), or a random access memory (random access memory, RAM).

In some implementations, the signal-carrying medium 1500 may include a computer-recordable medium 1502, for example but not limited to, a memory, a read/write (R/W) CD, or an R/W DVD.

In some implementations, the signal-carrying medium 1500 may include a communication medium 1503, for example but not limited to, a digital and/or analog communication medium (for example, an optical fiber, a waveguide, a wired communication link, or a wireless communication link). The signal-carrying medium 1500 may be conveyed by the communication medium 1503 in a wireless form (for example, a wireless communication medium that complies with the IEEE 1502.11 standard or another transmission protocol). The one or more program instructions may be, for example, computer-executable instructions or logic implementation instructions.

In some examples, the communication apparatus described for FIG. 8 may be configured to provide various operations, functions, or actions in response to one or more program instructions in the computer-readable medium 1501, the computer-recordable medium 1502, and/or the communication medium 1503.

It should be understood that the arrangement described herein is merely used as an example. Therefore, a person skilled in the art should understand that other arrangements and other elements (for example, machines, interfaces, functions, sequences, and function groups) can be used instead, and some elements may be omitted together based on a desired result. In addition, a plurality of the described elements are functional entities that can be implemented as discrete or distributed components, or implemented in any appropriate combination at any appropriate location in combination with another component.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer-executable instructions are executed on a computer, the procedures or functions according to embodiments of this application are all or partially generated. The computer may be a general-purpose computer, a dedicated computer, a computer network, or another programmable apparatus.

The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

**1.** A communication method, wherein the method is applied to a bus network, and comprises:

sending a request message to a bus device, wherein the request message is used to request to access a first configuration space register of the bus device, the request message comprises a network address, first indication information, and information about the first configuration space register of the bus device, the network address is an address allocated by a network management unit to the bus device, and the first indication information indicates a type of an operation performed on the first configuration space register; and

receiving a response message from the bus device in response to the request message.

2. The method according to claim 1, wherein the request message further comprises a task identifier, the response message comprises the task identifier, and the task identifier is used to determine that the response message is a message in response to the request message.

3. The method according to claim 1 or 2, wherein the type of the operation performed on the first configuration space register comprises a read operation or a write operation.

4. The method according to claim 3, wherein if the type of the operation performed on the first configuration space register is the write operation, the request message further comprises data to be written into the first configuration space register.

5. The method according to claim 4, wherein the request message further comprises second indication information, and the second indication information indicates to write the data into at least one byte of the first configuration space register.

6. The method according to any one of claims 1 to 5, wherein the information about the first configuration space register comprises at least one of the following:

type information of the first configuration space register, an index of the first configuration space register, or an address of the first configuration space register.

7. The method according to any one of claims 1 to 6, wherein the response message indicates whether the operation performed on the first configuration space register succeeds; or

if the type of the operation performed on the first configuration space register is the read operation, the response message comprises information read from the first configuration space register.

8. The method according to any one of claims 1 to 7, wherein the response message further comprises information indicating that the response message is in response to the read operation or the write operation.

9. The method according to any one of claims 1 to 8, wherein the request message is further used to request to access a second configuration space register of the bus device, the request message further comprises third indication information and information about the second configuration space register, and the third indication information indicates a type of an operation performed on the second configuration space register.

10. The method according to any one of claims 1 to 9, wherein the bus network comprises the network management unit and a plurality of bus devices, and the bus device is any one of the plurality of bus devices.

11. A communication method, wherein the method is applied to a bus network, and comprises:

receiving a request message from a network management unit, wherein the request message is used to request to access a first configuration space register of a bus device, the request message comprises a network address, first indication information, and information about the first configuration space register of the bus device, the network address is an address allocated by the network management unit to the bus device, and the first indication information indicates a type of an operation performed on the first configuration space register; and sending a response message to the network management unit in response to the request message.

12. The method according to claim 11, wherein the request message further comprises a task identifier, the response message comprises the task identifier, and the task identifier is used to determine that the response message is a message in response to the request message.

13. The method according to claim 11 or 12, wherein the type of the operation performed on the first configuration space register comprises a read operation or a write operation.

14. The method according to claim 13, wherein if the type of the operation performed on the first configuration space register is the write operation, the request message further comprises data to be written into the first configuration space register.

15. The method according to claim 14, wherein the request message further comprises second indication information, and the second indication information indicates to write the data into at least one byte of the first configuration space register.

16. The method according to any one of claims 11 to 15, wherein the information about the first configuration space register comprises at least one of the following:
type information of the first configuration space register, an index of the first configuration space register, or an address of the first configuration space register.

17. The method according to any one of claims 11 to 16, wherein the response message indicates whether the operation performed on the first configuration space register succeeds; or
if the type of the operation performed on the first configuration space register is the read operation, the response message comprises information read from the first configuration space register.

18. The method according to any one of claims 11 to 17, wherein the response message further comprises information indicating that the response message is in response to the read operation or the write operation.

19. The method according to any one of claims 11 to 18, wherein the request message is further used to request to access a second configuration space register of the bus device, the request message further comprises third indication information and information about the second configuration space register, and the third indication information indicates a type of an operation performed on the second configuration space register.

20. The method according to any one of claims 11 to 19, wherein the bus network comprises the network management unit and a plurality of bus devices, and the bus device is any one of the plurality of bus devices.

21. A communication method, wherein the method is applied to a bus network, and comprises:

sending, by a network management unit, a request message to a bus device, wherein the request message is used to request to access a first configuration space register of the bus device, the request message comprises a network address, first indication information, and information about the first configuration space register of the bus device, the network address is an address allocated by the network management unit to the bus device, and the first indication information indicates a type of an operation performed on the first configuration space register; and
sending, by the bus device, a response message to the network management unit in response to the request message.

22. A communication system, comprising a network management unit and a bus device, wherein

the network management unit is configured to send a request message to the bus device, wherein the request message is used to request to access a first configuration space register of the bus device, the request message comprises a network address, first indication information, and information about the first configuration space register of the bus device, the network address is an address allocated by the network management unit to the bus device, and the first indication information indicates a type of an operation performed on the first configuration space register; and
the bus device is configured to send a response message to the network management unit in response to the request message.

23. A communication apparatus, comprising a processor configured to read instructions stored in a memory, wherein when the processor executes the instructions, the communication apparatus is enabled to implement the method according to any one of claims 1 to 10 or the method according to any one of claims 11 to 20.

24. A chip, comprising:
at least one processing core, configured to perform the method according to any one of claims 1 to 10 or the method according to any one of claims 11 to 20.

**25.** A computer system, comprising the chip according to claim 24.

**26.** A computer program product, wherein the computer program product comprises computer program code, and when the computer program code is run on a computer, the method according to any one of claims 1 to 10 is performed; or when the computer program code is run on a computer, the method according to any one of claims 11 to 20 is performed.

**27.** A computer-readable storage medium, comprising a computer program, wherein when the computer program is run on a computer system, a processing module in the computer system is enabled to perform the method according to any one of claims 1 to 10; or when the computer program is run on a computer system, a processing module in the computer system is enabled to perform the method according to any one of claims 11 to 20.

Computer device

Processor 101

Core

Core

Input/
Output
device 102

Input/
Output
device 102

Cache 104

Memory management unit
105

Input/Output memory
management unit 106

Bus 108

Memory
103

Network

Network
interface
card 1072

Storage
class
memory
1071

Storage
class
memory
1071

Solid-state
drive

Solid-state
drive

Storage 107

FIG. 1

FIG. 2

| UBLINK | NPI | IP | UDP | TPH | UPI | UEID | TAH | Payload | ICRC |
|--------|-----|----|----|-----|-----|------|-----|---------|------|

FIG. 3

FIG. 4

## CPU

RP 0 | RP 1

Bus X

Bus N

UP

PCIe switch

Bus N+1

DP_0 | DP_1 | DP_m

Bus N+2 | Bus N+3 | Bus N+2+m

EP_0 | EP_1 | EP_m

FIG. 5

## Configuration space register

Basic block | Route block | Capability block | Port block | User-defined block

| Segment 0 | Segment 0 | Reserved | ... | Reserved | Reserved |
| | | Segment k | | Segment L | Segment M |
| | | ... | | ... | ... |
| | | Segment 1 | | Segment 1 | Segment 1 |
| | | Segment 0 | | Segment 0 | Segment 0 |

FIG. 6

Block

| | |
|---|---|
| Reserved | |
| Register k | 0x10000*N+0XK*4 |
| ... | |
| Register 1 | 0x10000*N+0X4 |
| Register 0 | 0x10000*N+0X0 |

Segment N

...

| | |
|---|---|
| Reserved | |
| Register k | 0x10000+0XK*4 |
| ... | |
| Register 1 | 0x10000+0X4 |
| Register 0 | 0x10000+0X0 |

Segment 1

| | |
|---|---|
| Reserved | |
| Register k | 0XK*4 |
| ... | |
| Register 1 | 0X4 |
| Register 0 | 0X0 |

Segment 0

(a)

Bus network

Universal bus

Network management unit

Bus device #1

Bus device #2

Bus device #n

(b)

FIG. 7

| Network management unit | | Bus device |
|---|---|---|

S810: Request message →

← S820: Response message

**FIG. 8**

| Message header |
|---|
| Payload |

**FIG. 9**

| Message header | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|
| 31 | 30 | 29 | 28 | 27 | 26 | 25 | 24 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 |
| Sub-message code | | | | Message code | | | | Task identifier | | | | | | | | Message payload length | | | | | | | | | | | | | | | |

FIG. 10

EP 4 738 109 A1

EP 4 738 109 A1

| Message payload | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|
| 31 | 30 | 29 | 28 | 27 | 26 | 25 | 24 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 |

**Access request_0**

| Function entity index | | | | | | | | | | | | | | | | Block type | | | | | | | | Byte enable | | | | Operation code | | | |
|---|---|---|---|---|---|---|---|---|---|---|---|---|---|---|---|---|---|---|---|---|---|---|---|---|---|---|---|---|---|---|---|
| Reserved | | | | | | | | Request address | | | | | | | | | | | | | | | | | | | | | | | |
| Reserved | | | | | | | | | | | | | | | | | | | | | | | | | | | | | | | |
| Write data | | | | | | | | | | | | | | | | | | | | | | | | | | | | | | | |

...

**Access request_N**

| Function entity index | | | | | | | | | | | | | | | | Block type | | | | | | | | Byte enable | | | | Operation code | | | |
|---|---|---|---|---|---|---|---|---|---|---|---|---|---|---|---|---|---|---|---|---|---|---|---|---|---|---|---|---|---|---|---|
| Reserved | | | | | | | | Request address | | | | | | | | | | | | | | | | | | | | | | | |
| Reserved | | | | | | | | | | | | | | | | | | | | | | | | | | | | | | | |
| Write data | | | | | | | | | | | | | | | | | | | | | | | | | | | | | | | |

FIG. 11

| | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|
| Message payload | | | | | | | | | | | | | | | | | | | | | | | | | | | | | | | |
| 31 | 30 | 29 | 28 | 27 | 26 | 25 | 24 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 |

**Access response_0**

| Reserved | Status | Reserved | Operation code |
|---|---|---|---|
| Read data | | | |
| Reserved | | | |
| Reserved | | | |

...

**Access response_N**

| Reserved | Status | Reserved | Operation code |
|---|---|---|---|
| Read data | | | |
| Reserved | | | |
| Reserved | | | |

FIG. 12

Apparatus 1300

Transceiver unit 1310

Processing unit 1320

FIG. 13

Chip system 1400

Processor 1410

Processor 1410

Receiving circuit 1420

Receiving circuit 1420

FIG. 14

Computer program product

Signal-carrying medium 1500

Program instructions

| Computer-readable medium 1501 | Computer-recordable medium 1502 | Communication medium 1503 |

FIG. 15

## INTERNATIONAL SEARCH REPORT

| International application No. |
|---|
| **PCT/CN2024/074976** |

### A. CLASSIFICATION OF SUBJECT MATTER

G06F 9/4401(2018.01)i

According to International Patent Classification (IPC) or to both national classification and IPC

### B. FIELDS SEARCHED

Minimum documentation searched (classification system followed by classification symbols)

IPC: G06F9/-

Documentation searched other than minimum documentation to the extent that such documents are included in the fields searched

Electronic data base consulted during the international search (name of data base and, where practicable, search terms used)

CNABS, CNTXT, WPABSC, ENTXTC, CNKI, 万方, WANFANG: 郭健, 总线, 总线设备, 端设备, 端点设备, 外部设备, 地址, 网络地址, 虚拟地址, 物理地址, 配置空间寄存器, 配置寄存器, 寄存器, 访问, 请求, 消息: VEN, ENTXT, IEEE: BUS, endpoint?, EP, address, virtual address, physical address, network address, PCI?, PCI express, configuration space register?, base address register?, BAR, Device ID, Vendor ID, register?, access+, request+, message?

### C. DOCUMENTS CONSIDERED TO BE RELEVANT

| Category* | Citation of document, with indication, where appropriate, of the relevant passages | Relevant to claim No. |
|---|---|---|
| X | CN 116010296 A (HUAWEI TECHNOLOGIES CO., LTD.) 25 April 2023 (2023-04-25) claims 10-53, description, paragraph 124, and figures 1-9 | 1-27 |
| A | CN 114006875 A (HUAWEI TECHNOLOGIES CO., LTD.) 01 February 2022 (2022-02-01) entire document | 1-27 |
| A | CN 108471384 A (BEIJING BAIDU NETCOM SCIENCE AND TECHNOLOGY CO., LTD.) 31 August 2018 (2018-08-31) entire document | 1-27 |
| A | CN 115421795 A (SHANDONG YUNHAI GUOCHUANG CLOUD COMPUTING EQUIPMENT INDUSTRY INNOVATION CENTER CO., LTD.) 02 December 2022 (2022-12-02) entire document | 1-27 |
| A | US 2019220413 A1 (INTEL CORP.) 18 July 2019 (2019-07-18) entire document | 1-27 |

☐ Further documents are listed in the continuation of Box C.   ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **08 March 2024** | **26 March 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/074976**

| Patent document cited in search report | | | Publication date (day/month/year) | Patent family member(s) | | | Publication date (day/month/year) |
|---|---|---|---|---|---|---|---|
| CN | 116010296 | A | 25 April 2023 | WO | 2023066268 | A1 | 27 April 2023 |
| CN | 114006875 | A | 01 February 2022 | WO | 2022012309 | A1 | 20 January 2022 |
| | | | | EP | 4167100 | A1 | 19 April 2023 |
| | | | | US | 2023161728 | A1 | 25 May 2023 |
| | | | | EP | 4167100 | A4 | 08 November 2023 |
| CN | 108471384 | A | 31 August 2018 | CN | 108471384 | B | 28 July 2020 |
| CN | 115421795 | A | 02 December 2022 | | None | | |
| US | 2019220413 | A1 | 18 July 2019 | US | 11126554 | B2 | 21 September 2021 |
| | | | | DE | 102020102841 | A1 | 24 September 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310996790